# EUROPÄISCHE PATENTSCHRIFT

(11) **EP 0 638 711 B1**
(45) Veröffentlichungstag und Bekanntmachung des Hinweises auf die Patenterteilung: **04.06.1997**
(21) Anmeldenummer: 93810553.3
(22) Anmeldetag: 05.08.1993
(51) Int. Cl.: F01N 3/28, B01J 35/04

(54) **Abgaskatalysator, insbesondere für Automobile**
Exhaust gas catalyst, in particular for cars
Catalyseur pour gaz d'échappement, en particulier pour automobiles

(43) Veröffentlichungstag der Anmeldung: 15.02.1995
(73) Patentinhaber: Sulzer Chemtech AG, CH-8404 Winterthur (CH)
(72) Erfinder: Dekumbis, Roger, Dr., CH-8050 Zürich (CH); Stringaro, Jean-Paul, Dr., CH-8180 Bülach (CH)
(74) Vertreter: Trieblnig, Adolf

(56) Entgegenhaltungen:
- EP-A- 0 433 222
- WO-A-92/02716
- DE-A- 3 923 094
- DE-A- 4 138 851
- GB-A- 2 079 174

## Beschreibung

Die Erfindung betrifft einen Abgaskatalysator gemäss Oberbegriff von Anspruch 1 sowie die Verwendung einer derartigen Vorrichtung bei Automobilen oder als stationärer katalytischer Nachverbrennungsapparat.

Der Abgaskatalysator ist ein Bauteil, das im Abgassystem beispielsweise eines Automobils integriert ist und in dem eine katalytische Nachverbrennung stattfindet. Durch die Nachverbrennung werden Schadstoffe, nämlich Kohlenmonoxid, Kohlenwasserstoffe und Stickstoffoxide, abgebaut, d.h. zu Kohlendioxid, Stickstoff und Wasser umgewandelt. Die Nachverbrennung soll möglichst nahe am Motor stattfinden, damit beim Kaltstart der Wärmeinhalt der Abgase ohne grosse Verluste genutzt werden kann und somit die Betriebstemperatur (250 - 750 °C) nach einer möglichst kurzen Anlaufphase erreicht wird. Eine bekannte und bezüglich der Nachverbrennung vorteilhafte Bauform des Abgaskatalysators ist ein sogenannter Monolith, bei dem ein keramisches Trägermaterial eine Wabenstruktur aufweist. Diese Wabenstruktur wird durch eine Vielzahl von parallel liegender Kanäle gebildet. Da alle Kanäle gleich lang sein müssen, weist die Wabenstruktur im wesentlichen eine zylindrische Form auf, d.h. die Queschnittsflächen der Wabenstruktur sind über deren gesamten Länge gleich gross und gleich geformt.

Wegen den engen Platzverhältnissen in der Umgebung eines Automotors ist es in der Regel nicht möglich, einen Abgaskatalysator der bekannten Bauart auf befriedigende Weise in das Abgassystem zu integrieren. Es besteht nun die Frage, ob es überhaupt Massnahmen gibt, mittels derer eine bessere Integration möglich ist. Grundlage der vorliegenden Erfindung ist die Erkenntnis, dass es eine solche Massnahme tatsächlich geben kann: wenn es nämlich gelingt, einen Abgaskatalysator zu finden, der eine flexiblere Formgebung als die bekannten Vorrichtungen erlaubt. Eine flexiblere Formgebung würde beispielsweise ermöglichen, bei vorgegebenen Hindernissen in der Umgebung des Automotors den Abgaskatalysator derart zu gestalten, dass er sich trotz Hindernissen sehr nahe bei der Abgasaustrittstelle des Motors anordnen lässt. Es ist daher die besondere Aufgabe der Erfindung, einen Abgaskatalysator zu schaffen, der die genannte Flexibilität seiner Form aufweist. Diese Aufgabe wird durch die kennzeichnenden Merkmale des Anspruchs 1 gelöst.

Wegen des variablen Querschnitts des erfindungsgemässen Abgaskatalysators ergibt sich in der Trägerstruktur ein Strömungsfeld, das nicht homogen ist. Dies wäre - in Bezug auf die bekannten Abgaskatalysatoren - an sich ein schwerwiegender Nachteil. Aufgrund der besonderen Ausgestaltung des Kanalsystems mit den gegeneinander offenen und sich kreuzenden Kanälen (vgl. EP-A 0 433 223 = P.6318) ergibt sich eine radiale Vermischung des Gasstroms über den Querschnitt, wodurch sich Konzentrations- und Temperaturunterschiede, die sich durch das inhomogene Strömungsfeld ergeben würden, laufend ausgleichen.

Die abhängigen Ansprüche 2 bis 8 beziehen sich auf vorteilhafte Ausführungsformen des erfindungsgemässen Abgaskatalysators.

Nachfolgend wird die Erfindung anhand von Zeichnungen näher erläutert. Es zeigen:
- Fig. 1: einen teilweise aufgeschnittenen erfindungsgemässen Abgaskatalysator, für den zu Illustrationszwecken eine ausgeprägt unsymmetrische Form gewählt worden ist,
- Fig. 2: eine zweite Ausführungsform des erfindungsgemässen Abgaskatalysators,
- Fig. 3: einen quaderförmigen Raumbereich mit Hindernissen, für welchen ein erfindungsgemässer Abgaskatalysator konstruiert werden soll, der den freien Raum möglichst gut nutzt,
- Fig. 4: eine der Fig.3 zugeordnete Konstruktion, dargestellt als horizontalen Längsschnitt und
- Fig. 5: einen entsprechenden vertikalen Längsschnitt.

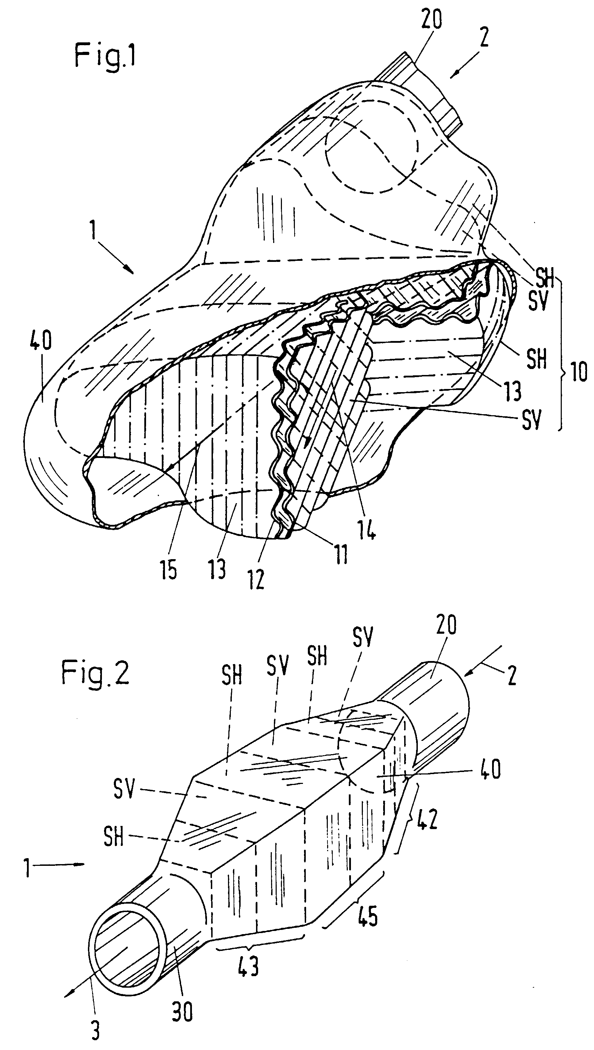

Der Abgaskatalysator 1 der Fig.1 umfasst eine Trägerstruktur 10 und ein Gehäuse 40. Das ungereinigte Abgas, Pfeil 2, wird über den Stutzen 20 zugeführt. Die Trägerstruktur 10 gliedert sich in Segmente und zwar alternierend in Segmente SH und SV. Ein Segment setzt sich aus gewellten Blechen oder Folien 11 und 12 zusammen, welche Lagen 13 bilden, die im wesentlichen parallel zur Hauptströmungsrichtung 15 des Abgases sind. Durch die Wellenform eines Bleches 11 sind beidseits parallele Kanäle gegeben, die gegenüber der Hauptströmungsrichtung 15 einen Winkel zwischen rund 10° und 70° einschliessen. Durch den Pfeil 14 ist die Strömungsrichtung eines solchen Kanals angegeben. Die Kanäle benachbarter Lagen 13 sind gegeneinander offen und kreuzen einander. Die Lagen 13 sind in den Segmenten SV vertikal ausgerichtet, in den Segmenten SH horizontal.

Der in Fig.2 dargestellte Abgaskatalysator 1, der eine wesentlich einfachere Form als jener der Fig.1 aufweist, enthält sechs Segmente SH und SV. Die Segmente in den Bereichen 42 und 43 beim Zutrittstutzen 20 bzw. beim Austrittstutzen 30 sind pyramidenstumpfförmig; im mittleren Bereich 45 sind die Segmente quaderförmig. Der Pfeil 3 gibt den Austrittstrom des gereinigten Abgases an.

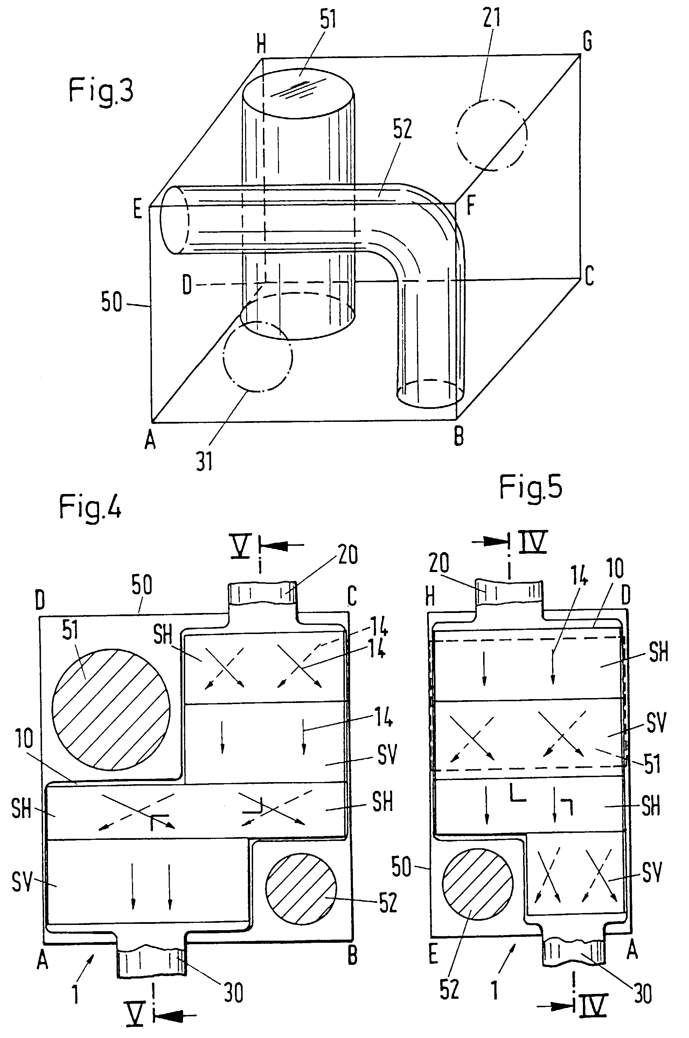

Anhand der Figuren 3 bis 5 wird für ein fiktives Beispiel dargestellt, wie bezüglich eines gegebenen Raumbereichs 50, das Hindernisse 51 und 52 einschliesst, ein erfindungsgemässer Abgaskatalysator 1 konstruiert werden kann. Der Raumbereich 50 wird durch einen Quader mit den Eckpunkten A, B, C, D, E, F, G und H gebildet. Auf der Hinterseite mit den Eckpunkten C, D, G und H soll der Eintrittsstutzen 20 für das ungereinigte Abgas liegen; die Stelle ist strichpunktiert mit dem Kreis 21 markiert. Der Kreis 31 gibt die Stelle für den Austrittsstutzen 30 auf der Vorderseite an. Fig.4 ist ein Schnitt durch den Abgaskatalysator nach der Linie IV - IV in Fig.5; Fig.5 ist ein Schnitt nach der Linie V - V in Fig.4. Die Trägerstruktur 10 setzt sich aus vier quaderförmigen Segmenten SH und SV zusammen. Die Pfeile 14 beziehen sich wieder auf die Stömungsrichtungen in den Kanälen.

Bei den dargestellten Beispielen ist angenommen, dass die Lagen 13 durch metallisches, folienartiges Material, das gewellt oder zickzackartig gefaltet ist, gebildet sind. Es ist aber auch möglich, dass die Trägerstruktur 10 aus einer extrudierten keramischen Masse hergestellt ist (vgl. EP-PS 0 444 172 = P.6303). Es sind grundsätzlich auch Mischformen denkbar: einzelne Segmente aus Keramik, die anderen aus Metall.

Die Wände der Trägerstruktur 10 können Durchbrüche, beispielsweise runde Löcher, aufweisen. Aufgrund von grösseren, rautenförmigen Durchbrüchen kann die Trägerstruktur 10 in Form einer Wirbelpackung, wie sie aus der WO 90/10497 (= P.6332) bekannt ist, vorliegen. Bei einer derartigen Wirbelpackung weist das Kanalsystem in allen Richtungen quer zur Hauptströmungsrichtung 15 eine gute Durchlässigkeit und ein gutes Mischvermögen auf, sodass es ohne Nachteil ist, wenn die Trägerstruktur 10 nicht in Segmente gegliedert wird.

Bei den in Fig.1 gezeigten Trägerstrukturen 10 besteht eine Anisotropie des Mischvermögens. Es ist daher von Vorteil, eine Gliederung in Segmente vorzusehen, wobei die Ausrichtung der Lagen 13 benachbarter Segmente - senkrecht zur Hauptströmungsrichtung 15 - verschieden sein soll. Insbesondere sollen die Lagen 13 benachbarter Segmente SH und SV jeweils eine um 90° gegeneinander versetzte Ausrichtung haben.

Es ist vorteilhaft, wenn die Wände der Trägerstruktur eine Feinstrukturierung aufweisen, aufgrund derer in Bezug auf eine Verbesserung der katalytischen Aktivität eine Vergrösserung der spezifischen Oberfläche vorliegt. In diesem Sinne kann eine Oberflächenstrukturierung in Form eines Washcoats vorgesehen werden.

## Patentansprüche

1. Abgaskatalysator (1) mit einer geordneten Trägerstruktur (10) für das katalytische Material, welche Trägerstruktur längs der Hauptströmungsrichtung (15) des Abgases zumindest in zwei Segmente (SH, SV) gegliedert ist und jedes Segment Lagen (13) mit parallel angeordneten Kanälen umfasst, wobei die Lagen im wesentlichen parallel zur Hauptströmungsrichtung sind, die Kanäle gegenüber der Hauptströmungsrichtung einen Winkel zwischen rund 10° und 70° einschliessen, die Kanäle benachbarter Lagen gegeneinander offen sind sowie einander kreuzen und die Lagen benachbarter Segmente verschiedene Ausrichtungen aufweisen,
dadurch gekennzeichnet, dass die Querschnittsflächen der Trägerstruktur entlang der Hauptströmungsrichtung zumindest teilweise variablen Flächeninhalt und/oder variable Form aufweisen.

2. Abgaskatalysator nach Anspruch 1, dadurch gekennzeichnet, dass die Lagen benachbarter Segmente jeweils eine um 90° gegeneinander versetzte Ausrichtung haben.

3. Abgaskatalysator nach Anspruch 1 oder 2, dadurch gekennzeichnet, dass die Lagen zumindest teilweise durch metallisches, folienartiges Material, das gewellt oder zickzackartig gefaltet ist, gebildet sind.

4. Abgaskatalysator nach Anspruch 3, dadurch gekennzeichnet, dass das folienartige Material Durchbrüche aufweist.

5. Abgaskatalysator nach Anspruch 4, dadurch gekennzeichnet, dass die Trägerstruktur aufgrund von Durchbrüchen eine Wirbelpackung bildet.

6. Abgaskatalysator nach Anspruch 1 oder 2, dadurch gekennzeichnet, dass die Trägerstruktur zumindest teilweise aus einer extrudierten keramischen Masse hergestellt ist.

7. Abgaskatalysator nach einem der Ansprüche 1 bis 6, dadurch gekennzeichnet, dass die Wände der Trägerstruktur eine Feinstrukturierung aufweisen, aufgrund derer in Bezug auf die katalytische Aktivität eine Vergrösserung der spezifischen Oberfläche vorliegt.

8. Abgaskatalysator nach Anspruch 7, dadurch gekennzeichnet, dass die Oberflächenstrukturierung in Form eines Washcoats vorliegt.

9. Verwendung eines Abgaskatalysators nach einem der Ansprüche 1 bis 8 für den Abbau von Schadstoffen aus Automobilabgasen.

10. Verwendung eines Abgaskatalysators nach einem der Ansprüche 1 bis 8 als stationärer katalytischer Nachverbrennungsapparat.

## Claims

1. Catalytic converter (1) for exhaust gas comprising an ordered supporting structure (10) for the catalytic material, wherein the support structure is divided along the direction (15) of main flow of the exhaust gas in at least two segments (SH, SV) and every segment includes layers (13) with channels arranged in parallel, the layers being substantially parallel to the direction of main flow, the channels making with the direction of main flow an angle between about 10° and 70°, the channels of adjacent layers being open towards each other and crossing each other, and the layers of adjacent segments having different orientation, characterised in that the cross-sectional areas of the support structure having along the direction of main flow at least partly variable area and/or shape.

2. Catalytic converter according to claim 1, characterised in that the layers of adjacent segments have an orientation displaced with respect to each other through 90°.

3. Catalytic converter according to claim 1 or 2, characterised in that the layers are formed at least partly by metallic, foil-type material which is corrugated or folded in a zigzag fashion.

4. Catalytic converter according to claim 3, characterised in that the foil-type material contains openings.

5. Catalytic converter according to claim 4, characterised in that, as a consequence of the openings, the supporting structure forms a vortex packing.

6. Catalytic converter according to claim 1 or 2, characterised in that the supporting structure is made at least partly of an extruded ceramic material.

7. Catalytic converter according to any one of claims 1 to 6, characterised in that the walls of the supporting structure have fine structuring as a consequence of which increase of the specific surface is obtained with regard to the catalytic activity.

8. Catalytic converter according to claim 7, characterised in that the surface structuring is in the form of a washcoat.

9. Use of a catalytic converter according to any one of claims 1 to 8 for the decomposition of pollutants from exhaust gas emitted by cars.

10. Use of a catalytic converter according to any one of claims 1 to 8 as a stationary catalytic afterburning apparatus.

## Revendications

1. Catalyseur pour gaz d'échappement (1), avec une structure support (10) ordonnée pur la matériau catalytique, structure support articulée le long de la direction d'écoulement principal (15) des gaz d'échappement au moins en deux segments (SH, SV) et chaque segment comprenant des couches (13) ayant de canaux disposés parallèlement, les couches étant sensiblement parallèles à la direction principale d'écoulement, les canaux faisant, par rapport à la direction principale d'écoulement, un angle compris entre environ 10° et 70°, les canaux de couches voisines étant ouverts les uns vers les autres et se croisant ainsi les uns les autres et les couches de segments voisins présentant des orientations différentes,
caractérisé en ce que les surfaces en section transversale de la structure support présentent le long de la direction principale d'écoulement, un contenu de surface au moins partiellement variable et/ou une forme variable.

2. Catalyseur pour gaz d'échappement selon la revendication 1, caractérisé en ce que les couches de segments voisins ont respectivement une orientation décalée de 90° les unes par rapport aux autres.

3. Catalyseur pour gaz d'échappement selon la revendication 1 ou 2, caractérisé en ce que les couches sont constituées au moins partiellement par un matériau métallique en feuilles, ondulées ou pliées en zig-zag.

4. Catalyseur pour gaz d'échappement selon la revendication 3, caractérisé en ce que la matériau en feuilles présente des passages.

5. Catalyseur pour gaz d'échappement selon la revendication 4, caractérisé en ce que la structure support constitue un garnissage tourbillonnaire du fait des passages.

6. Catalyseur pour gaz d'échappement selon la revendication 1 ou 2, caractérisé en ce que la structure support est fabriquée au moins partiellement en une masse céramique extrudée.

7. Catalyseur pour gaz d'échappement selon l'une des revendications 1 à 6, caractérisé en ce que les parois de la structure support présentent une structuration fine sur la base de laquelle une augmentation de la surface spécifique est produite, concernant l'activité catalytique.

8. Catalyseur pour gaz d'échappement selon la revendication 7, caractérisé en ce que la structuration de surface se présente sous la forme des ondulations d'une planche à laver.

9. Utilisation d'un catalyseur pour gaz d'échappement selon l'une des revendications 1 à 8, pour la décomposition de substances nocives issues des gaz d'échappement d'automobile.

10. Utilisation d'un catalyseur pour gaz d'échappement selon l'une des revendications 1 à 8, comme appareil de post-combustion catalytique stationnaire.
